# EUROPEAN PATENT APPLICATION

(11) **EP 4 620 992 A1**
(43) Date of publication of application: **24.09.2025**
(21) Application number: 23891397.4
(22) Date of filing: 06.11.2023
(51) Int. Cl.: C08F 290/06

(54) **ULTRAVIOLET-CURABLE ORGANOPOLYSILOXANE COMPOSITION, CURED OBJECT, AND ELECTRONIC APPLIANCE**

(30) Priority: 17.11.2022 JP 2022184075
(71) Applicant: SHIN-ETSU CHEMICAL CO., LTD., Tokyo 1000005 (JP)
(72) Inventor: MATSUDA, Tsuyoshi, Annaka-shi, Gunma 379-0224 (JP); MATSUMOTO, Nobuaki, Annaka-shi, Gunma 379-0224 (JP)
(74) Representative: Mewburn Ellis LLP
(86) International application number: PCT/JP2023/039853
(87) International publication number: WO 2024/106245

(57) **Abstract**

An ultraviolet-curable organopolysiloxane composition comprising: 100 parts by mass of (A) an organopolysiloxane represented by formula (1) 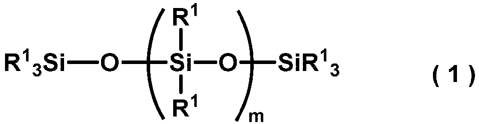 [R¹ is a C1-C10 monovalent hydrocarbon group or a monovalent group represented by formula (2), the organopolysiloxane having at least one monovalent group represented by formula (2) in the molecule, and m is an integer of 1-10,000. 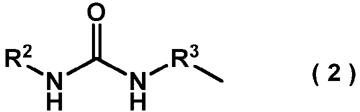 (R² is a monovalent group including at least one group selected from among acryloyl, methacryloyl, acryloyloxy, and methacryloyloxy groups and R³ is a C1-C20 divalent hydrocarbon group)];
0.1-20 parts by mass of (B) a photopolymerization initiator; and
0.1-50 parts by mass of (C) a thiol compound.

The ultraviolet-curable organopolysiloxane composition, upon irradiation with ultraviolet light, rapidly cures even in the air, in which oxygen is present, without suffering any surface curing inhibition, and exhibits satisfactory curability even in shades where the ultraviolet light does not reach.

## Description

### TECHNICAL FIELD

This invention relates to a UV-curable organopolysiloxane composition which rapidly cures upon irradiation of UV and is curable even in an area which is not directly accessible to UV, a cured product thereof, and an electronic device coated or bonded with the cured product.

### BACKGROUND ART

Under the current strategy toward the decarbonization society, energy saving and step shortening in the manufacturing process become increasingly important. In particular, many processes of manufacturing optical and electric/electronic devices and displays are accompanied by a high-temperature heating step for curing bonding, sealing and embedding materials, which needs vast energy, time and equipment. Improvements in these respects are thus desired. The improvement in the heating step is of significance not only from the aspects of energy and expense, but also from the aspect of manufacturing technology which causes no damages to other members.

In view of the above needs, UV-curable compositions are attractive. The UV-curable compositions contain a photo-initiator which is activated by UV irradiation. Upon UV irradiation, polymerization or crosslinking reaction takes place so that the composition cures in a short time of several tens of seconds to ten-odd minutes. Thus, other members are little damaged and large equipment are unnecessary. Recently UV irradiation units utilizing LED are developed. The UV cure provides for a superior manufacturing process.

The UV-curable compositions, however, undergo no polymerization or crosslinking reaction in dark areas which are not directly accessible to UV. The use of UV-curable compositions is restrained in the adhesive/coating application for electric/electronic devices comprising parts of complicated structure.

To solve such problems, compositions relying on dual curing mechanisms like UV and heat curing mechanisms or UV and moisture curing mechanisms have been proposed. Patent Document 1 (JP-A 2021-501813) discloses an organopolysiloxane composition relying on dual UV and heat curing mechanisms and having photo-reactive groups such as (meth)acryloyl groups and alkenyl groups or silicon-bonded hydrogen atoms in the molecule. With this method, however, heating is required for the cure in dark areas and there is a risk of cure inhibition by some adherends.

Patent Document 2 (JP 2647285) and Patent Document 3 (JP 2587340) describe methods of preparing organopolysiloxanes having acryloyl and alkoxysilyl groups in the molecule. On use of these organopolysiloxanes, cure takes place not only in the UV-irradiated areas, but also in the dark areas due to polymerization reaction of acryloyl groups by UV exposure and condensation reaction of alkoxysilyl groups with the aid of moisture. In the organopolysiloxane compositions of these patent documents, however, the alkoxysilyl groups have a low condensation reactivity so that the progress of condensation cure is slow. This substantially negates the advantage of fast cure by which the UV-curable composition is characterized.

Patent Document 4 (WO 2022/113953) proposes an actinic energy radiation-curable composition comprising a compound having an ethylenically unsaturated group, a fluorescent agent and a reducing agent in a specific proportion. With this composition, cure proceeds to the dark areas even on use of a substrate having a low light reflectivity, but cure is limited to thin film. In the case of thick film, deep-section cure is insufficient.

### PRIOR ART DOCUMENTS

### PATENT DOCUMENTS

Patent Document 1: JP-A 2021-501813
Patent Document 2: JP 2647285
Patent Document 3: JP 2587340
Patent Document 4: WO 2022/113953

### SUMMARY OF INVENTION

### TECHNICAL PROBLEM

An object of the invention, which has been made under the above-mentioned circumstances, is to provide a UV-curable organopolysiloxane composition of full convenience which rapidly cures upon UV irradiation and is effectively curable even in shadow or dark areas which are not accessible to UV, a cured product thereof, and an electronic device coated or bonded with the cured product.

### SOLUTION TO PROBLEM

Making extensive investigations to attain the above object, the inventors have found that using an organopolysiloxane of specific structure and a thiol compound, there is obtained a UV-curable organopolysiloxane composition which is excellent in surface cure even in air without suffering oxygen cure inhibition and develops effective cure even in shadow areas which are not accessible to UV. The invention is predicated on this finding.

Accordingly, the invention provides a UV-curable organopolysiloxane composition, a cured product thereof, and an electronic device coated or bonded with the cured product, as defined below.
<1> A UV-curable organopolysiloxane composition comprising
   (A) 100 parts by weight of an organopolysiloxane having the formula (1): 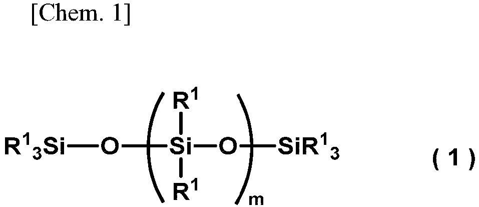
      wherein R¹ is independently a C₁-C₁₀ monovalent hydrocarbon group or a monovalent group having the formula (2), at least one monovalent group having the formula (2) being contained in the molecule, and m is an integer of 1 to 10,000, 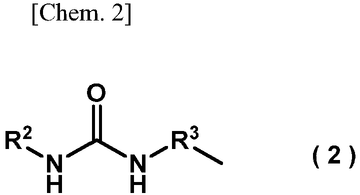
      wherein R² is a monovalent group containing at least one group selected from among acryloyl, methacryloyl, acryloyloxy, and methacryloyloxy groups and R³ is a C₁-C₂₀ divalent hydrocarbon group,
   (B) 0.1 to 20 parts by weight of a photopolymerization initiator, and
   (C) 0.1 to 50 parts by weight of a thiol compound.
<2> The UV-curable organopolysiloxane composition of <1> wherein component (C) is a thiol compound having the formula (3):

   [R⁴-CH(SH)-R⁵-C(=O)O-]ₙR⁶ (3)

   wherein R⁴ is hydrogen or a C₁-C₂₀ monovalent hydrocarbon group, R⁵ is a C₁-C₂₀ divalent hydrocarbon group, R⁶ is a C₁-C₂₀ mono- to trivalent hydrocarbon group which may contain oxygen, and n is 1, 2 or 3.
<3> The UV-curable organopolysiloxane composition of <1> or <2>, further comprising either one or both of (D) a monofunctional (meth)acrylate compound free of a siloxane structure in the molecule and (E) a polyfunctional (meth)acrylate compound free of a siloxane structure in the molecule, the total amount of components (D) and (E) being 1 to 500 parts by weight per 100 parts by weight of component (A).
<4> A cured product of the UV-curable organopolysiloxane composition of any one of <1> to <3>.
<5> An electronic device coated or bonded with the cured product of <4>.

### ADVANTAGEOUS EFFECTS OF INVENTION

The UV-curable organopolysiloxane composition of the invention can be rapidly cured by UV irradiation. Immediately after UV irradiation, the composition gets rid of surface cure inhibition even in air in which oxygen is present. The composition develops effective cure even in shadow areas which are not accessible to UV. Accordingly, the UV-curable organopolysiloxane composition is useful as a coating agent to electronic boards of complicated structure and an adhesive to electronic parts.

### DESCRIPTION OF EMBODIMENTS

Now the invention is described in detail.

As used herein, the term "(meth)acryloyl functional group" refers to one or more groups selected from acryloyl, methacryloyl, acryloyloxy and methacryloyloxy groups. The term "(meth)acrylate" refers to one or both of acrylate and methacrylate.

### [UV-curable organopolysiloxane composition]

The invention provides a UV-curable organopolysiloxane composition comprising the following components (A) to (C):
(A) an organopolysiloxane having the formula (1) defined below,
(B) a photopolymerization initiator, and
(C) a thiol compound.

### [Component (A): Organopolysiloxane]

Component (A) is an organopolysiloxane having the formula (1).

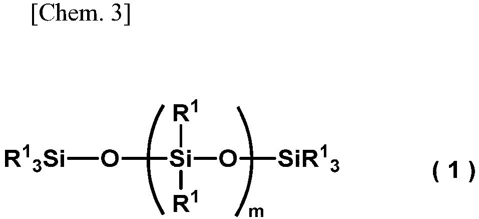

In the formula (1), R¹ is independently a C₁-C₁₀ monovalent hydrocarbon group or a monovalent group having the formula (2), at least one monovalent group having the formula (2) being contained in the molecule, and m is an integer of 1 to 10,000.

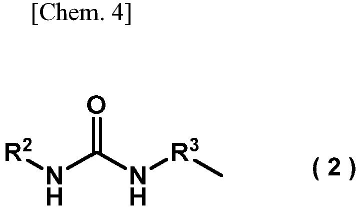

In the formula (2), R² is a monovalent group containing at least one group selected from among acryloyl, methacryloyl, acryloyloxy, and methacryloyloxy groups and R³ is a C₁-C₂₀ divalent hydrocarbon group.

In the formula (1), R¹ is independently a C₁-C₁₀ monovalent hydrocarbon group or a monovalent group having the formula (2).

The monovalent hydrocarbon group may be straight, branched or cyclic, and examples thereof include alkyl groups such as methyl, ethyl, n-propyl, isopropyl, n-butyl, isobutyl, tert-butyl, n-hexyl, cyclohexyl, n-octyl, 2-ethylhexyl and n-decyl; alkenyl groups such as vinyl, allyl or 2-propeny, 1-propenyl, isopropenyl and butenyl; aryl groups such as phenyl, tolyl, xylyl and naphthyl; and aralkyl groups such as benzyl, phenylethyl and phenylpropyl.

Also included are the monovalent hydrocarbon groups in which some or all of the carbon-bonded hydrogen atoms are substituted by substituent groups, for example, halogen-substituted hydrocarbon groups such as chloromethyl, bromoethyl and trifluoropropyl, and cyano-substituted hydrocarbon groups such as cyanoethyl.

Of these hydrocarbon groups, C₁-C₆ alkyl groups and aryl groups are preferred, with methyl, ethyl and phenyl being more preferred.

In the formula (1), at least one of R¹, preferably 1 to 20, more preferably 1 to 10, even more preferably 1 to 5 of R¹ is a monovalent group having the formula (2), that is, a urea structure-containing monovalent hydrocarbon group having at least one (meth)acryloyl functional group.

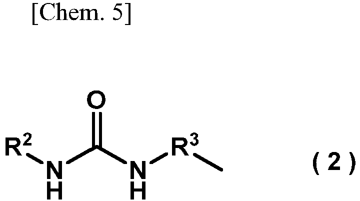

In the formula (2), R² is a monovalent group containing at least one group, preferably one to four groups, more preferably one or two groups selected from among acryloyl, methacryloyl, acryloyloxy, and methacryloyloxy groups. Of these groups, C₁-C₂₀ monovalent hydrocarbon groups in which at least one hydrogen atom, preferably one to four hydrogen atoms, more preferably one or two hydrogen atoms are substituted by acryloyl, methacryloyl, acryloyloxy or methacryloyloxy groups are preferred, and C₁-C₄ straight or branched alkyl groups in which at least one hydrogen atom, preferably one to four hydrogen atoms, more preferably one or two hydrogen atoms are substituted by acryloyl, methacryloyl, acryloyloxy or methacryloyloxy groups are more preferred.

The monovalent groups shown below are exemplary of R².

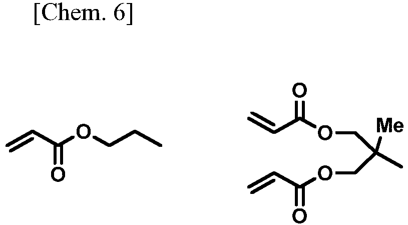

Herein Me stands for methyl.

In the formula (2), R³ is a C₁-C₂₀ divalent hydrocarbon group which may be straight, branched or cyclic. Examples thereof include alkylene groups such as methylene, ethylene, propylene, trimethylene, tetramethylene, isobutylene, pentamethylene, hexamethylene, heptamethylene, octamethylene, nonamethylene, and decamethylene. Of these, methylene, ethylene and trimethylene are preferred as R³, with trimethylene being more preferred.

Examples of the monovalent group having the formula (2) are shown below.

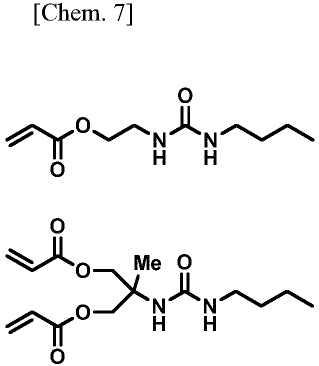

Herein Me stands for methyl.

In the formula (1), m is an integer of 1 to 10,000, preferably 10 to 5,000, more preferably 20 to 1,500, even more preferably 50 to 500. If m exceeds 10,000, workability may be degraded because of too high a viscosity.

The value of m may be computed as an average value on analysis by ²⁹Si-NMR spectroscopy while it may also be determined as number average molecular weight versus polystyrene standards on analysis by gel permeation chromatography (GPC).

The organopolysiloxane having the formula (1) has a viscosity at 25°C of preferably 0.01 to 100 Pa·s, more preferably 0.1 to 50 Pa·s, when it is taken into account to improve the workability of a composition having the organopolysiloxane formulated therein and the dynamic properties of a cured product of the composition. Notably, the viscosity is measurable by a rotational viscometer, for example, BL, BH, BS or cone plate type or rheometer (the same holds true, hereinafter).

Examples of the organopolysiloxane having the formula (1) include compounds having the following formulae (4) to (6).

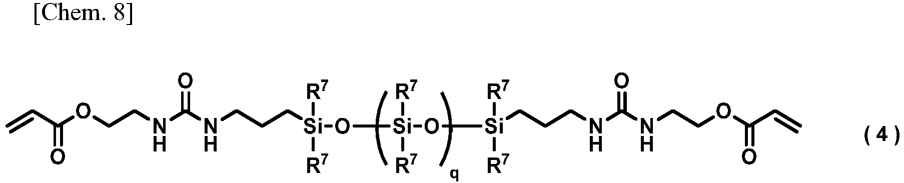

In the formula (4), R⁷ is each independently methyl, ethyl or phenyl, and q is an integer of 1 to 10,000, preferably 10 to 5,000, more preferably 20 to 1,500, even more preferably 50 to 500.

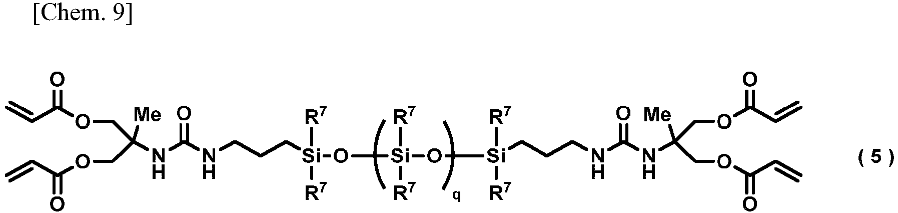

In the formula (5), R⁷ and q are as defined above, and Me is methyl.

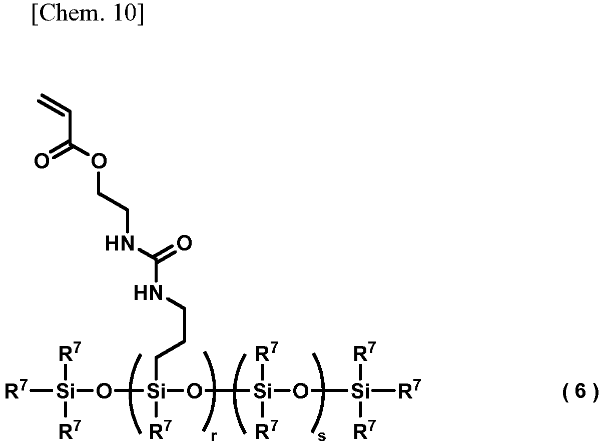

In the formula (6), R⁷ is as defined above. The order of arrangement of siloxane units in two sets of parentheses may be arbitrary, namely blockwise or random. The subscripts r and s are integers in the range: r ≥ 1, preferably 1 ≤ r ≤ 20, more preferably 1 ≤ r ≤ 10, even more preferably 1 ≤ r ≤ 5, s ≥ 0, preferably 5 ≤ s ≤ 4,999, more preferably 8 ≤ s ≤ 1,499, even more preferably 20 ≤ s ≤ 499, and 1 ≤ r+s ≤ 10,000, preferably 10 ≤ r+s ≤ 5,000, more preferably 20 ≤ r+s ≤ 1,500, even more preferably 50 ≤ r+s ≤ 500.

The method of preparing the organopolysiloxane having the formula (1) is, for example, by mixing an organopolysiloxane having an amino group with a compound having an isocyanate group and (meth)acryloyl functional group and reacting them.

Exemplary of the organopolysiloxane having an amino group is a compound having the formula (7).

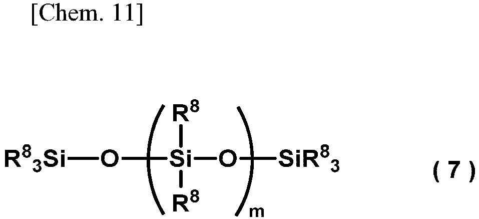

In the formula (7), m is as defined above. R⁸ is independently a C₁-C₁₀ monovalent hydrocarbon group or a group having the formula (8):
[Chem. 12]

H₂N-R³- (8)

wherein R³ is as defined above. At least one, preferably 1 to 20, more preferably 1 to 10, even more preferably 1 to 5 groups having formula (8) are contained in the molecule.

In the formula (7), examples of the C₁-C₁₀ monovalent hydrocarbon group represented by R⁸ are as exemplified above for the C₁-C₁₀ monovalent hydrocarbon group R¹ in formula (1). Of the monovalent hydrocarbon groups, C₁-C₆ alkyl groups and aryl groups are preferred, with methyl, ethyl and phenyl being more preferred.

As the organopolysiloxane having an amino group, side chain amino-modified dimethylsilicone oil (KF-864 by Shin-Etsu Chemical Co., Ltd.) and both end amino-modified dimethylsilicone oil (KF-8008 by Shin-Etsu Chemical Co., Ltd.) may be used.

Exemplary of the compound having an isocyanate group and (meth)acryloyl functional group is a compound having the formula (9).
[Chem. 13]

R²-N=C=O (9)

In the formula (9), R² is as defined above.

Examples of the compound having an isocyanate group and (meth)acryloyl functional group used herein include 2-(acryloyloxy)ethyl isocyanate (Karenz AOI by Resonac Corp.) and 1,1-(bisacryloyloxymethyl)ethyl isocyanate (Karenz BEI by Resonac Corp.).

In reacting these compounds, the compound having an isocyanate group and (meth)acryloyl functional group is used in such an amount as to give preferably 1.0 to 1.2 moles, more preferably 1.0 to 1.1 moles of isocyanate group on the compound having an isocyanate group and (meth)acryloyl functional group per mole of amino group in the organopolysiloxane having an amino group. If the amount of isocyanate group on the compound having an isocyanate group and (meth)acryloyl functional group is too small, side reaction (i.e., Michael addition reaction of amino group with (meth)acryloyl functional group) takes place, failing to provide the predetermined amount of (meth)acryloyl functional group. If the amount is too large, the composition having the same formulated therein may cure into a cured product having extremely low rubber physical properties.

The preferred reaction conditions include a reduced pressure, room temperature (23±15°C), and 1 to 72 hours. The reaction may also be conducted while heating if necessary.

### [Component (B): photopolymerization initiator]

Component (B) in the UV-curable organopolysiloxane composition is a photopolymerization initiator, which may be selected from those used in prior art UV-curable organopolysiloxane compositions. Examples include acetophenone, propiophenone, benzophenone, fluorene, benzaldehyde, anthraquinone, triphenylamine, carbazole, 3-methylacetophenone, 4-methylacetophenone, 3-pentylacetophenone, 4-methoxyacetophenone, 3-bromoacetophenone, 4-allylacetophenone, p-diacetylbenzene, 3-methoxybenzophenone, 4-methylbenzophenone, 4-chlorobenzophenone, 4,4'-dimethoxybenzophenone, 2,2-diethoxyacetophenone, 4-chloro-4'-benzylbenzophenone, 3-chloroxanthone, 3,9-dichloroxanthone, 3-chloro-8-nonylxanthone, benzoin, benzoin methyl ether, benzoin butyl ether, bis(4-dimethylaminophenyl)ketone, benzyl methoxyketal, 2-chlorothioxanthone, diethyl acetophenone, 1-hydroxycyclohexyl phenyl ketone, 2-methyl-1-[4-(methylthio)phenyl]-2-morpholin-1-one, 2-benzyl-dimethylamino-1-(4-morpholinophenyl)butanone, 1-[4-(2-hydroxyethoxy)phenyl]-2-methyl-1-propan-1-one, 2,2-dimethoxy-2-phenylacetophenone, 2-hydroxy-2-methyl-1-phenylpropan-1-one, cyclohexyl phenyl ketone, 2,4,6-trimethylbenzoyl-diphenyl-phosphine oxide, and mixtures thereof.

The amount of component (B) blended is 0.1 to 20 parts by weight, preferably 0.5 to 5 parts by weight per 100 parts by weight of component (A). A too small amount of component (B) fails to achieve its addition effect. If the amount is too large, dark area cure becomes poor, and a cured product is more strongly affected by decomposition residues of component (B) and is degraded in physical properties.

The amount of component (B) blended is about 0.01 to 10% by weight, preferably about 0.05 to 8% by weight, more preferably about 0.1 to 5% by weight based on the total weight of the composition, specifically the total weight of components (A) to (E).

### [Component (C): Thiol compound]

Component (C) is a thiol compound which contributes to the dark area cure. It is preferably a thiol compound having the formula (3).

[R⁴-CH(SH)-R⁵-C(=O)O-]ₙR⁶ (3)

In the formula (3), R⁴ is hydrogen or a C₁-C₂₀ monovalent hydrocarbon group, R⁵ is a C₁-C₂₀ divalent hydrocarbon group, R⁶ is a C₁-C₂₀ mono- to trivalent hydrocarbon group which may contain oxygen, and n is 1, 2 or 3.

In the formula (3), R⁴ is hydrogen or a C₁-C₂₀, preferably C₁-C₁₀ monovalent hydrocarbon group, examples of which are as exemplified above for the monovalent hydrocarbon group R¹ in formula (1) and also include lauryl, palmityl, myristyl, and stearyl groups. Inter alia, hydrogen and methyl are preferred.

R⁵ is a C₁-C₂₀, preferably C₁-C₁₀, more preferably C₁-C₆ divalent hydrocarbon group, for example, alkylene groups such as -(CH₂)ₚ- wherein p is an integer of 1 to 6. Of these, -CH₂-, -CH₂CH₂- and -CH₂CH₂CH₂- are preferred.

R⁶ is a C₁-C₂₀, preferably C₁-C₁₀ mono- to trivalent hydrocarbon group which may contain oxygen. Examples include the same monovalent hydrocarbon groups as exemplified for R¹ in formula (1), lauryl, palmityl, myristyl and stearyl groups, alkoxy-substituted alkyl groups such as methoxymethyl, methoxyethyl, methoxypropyl, methoxybutyl, ethoxymethyl, ethoxyethyl, ethoxypropyl, and ethoxybutyl, diester residues of 1,4-butane diol, triester residues of trimethylolpropane, and divalent hydrocarbon groups as exemplified for R³ in formula (1). Of these, tetramethylene and 2-ethylhexyl are preferred.

The thiol compound having the formula (3) is a compound known as ester type thiol. Examples thereof include, but are not limited to, 2-ethylhexyl-3-mercaptopropionate, stearyl-3- mercaptopropionate, methoxybutyl-β- mercaptopropionate, 1,4-butanediol bis(3-mercaptopropionate), 1,4-bis(3-mercaptobutylyloxy)butane, trimethylolpropanetris(3-mercaptopropionate), and trimethylolpropanetris(3-mercaptobutyrate), which may be used alone or in admixture.

Commercially available products of component (C) include Karenz MT BD1 and Karenz MT TPMB (Resonac Corp.), EHMP, MBMP, BDMP and TMMP (SC Organic Chemical Co., Ltd.).

The amount of the thiol compound blended as component (C) is 0.1 to 50 parts by weight, preferably 0.1 to 20 parts by weight per 100 parts by weight of component (A). If the amount of component (C) is too small, the composition is not improved in dark area cure. If the amount of component (C) is too large, the composition becomes less curable so that the cured product may have an extremely reduced hardness, or sometimes becomes uncurable.

In addition to the foregoing essential components, the UV-curable organopolysiloxane composition may contain either one or both of (D) a monofunctional (meth)acrylate compound free of a siloxane structure and (E) a polyfunctional (meth)acrylate compound free of a siloxane structure as an optional component, if necessary.

### [Component (D): Monofunctional (meth)acrylate compound free of a siloxane structure in the molecule]

Examples of the monofunctional (meth)acrylate compound free of a siloxane structure in the molecule as component (D) include isoamyl acrylate, lauryl acrylate, stearyl acrylate, ethoxy-diethylene glycol acrylate, methoxy-triethylene glycol acrylate, 2-ethylhexyl-diglycol acrylate, phenoxyethyl acrylate, phenoxydiethylene glycol acrylate, tetrahydrofurfuryl acrylate, cyclohexyl acrylate, isobornyl acrylate, and mixtures thereof.

### [Component (E): Polyfunctional (meth)acrylate compound free of a siloxane structure in the molecule]

Examples of the polyfunctional (meth)acrylate compound free of a siloxane structure in the molecule as component (E) include triethylene glycol diacrylate, polytetramethylene glycol diacrylate, neopentyl glycol diacrylate, 1,6-hexanediol diacrylate, dimethylol-tricyclodecane diacrylate, trimethylolpropane triacrylate, pentaerythritol tetraacrylate, and mixtures thereof.

When the (meth)acrylate compounds as component (D) and/or (E) are blended, the total amount of components (D) and (E) is preferably 1 to 500 parts by weight, more preferably 1 to 100 parts by weight per 100 parts by weight of component (A) in view of rubber physical properties of the cured product. When component (D) and/or (E) is combined with high-viscosity component (A), the viscosity of the overall composition can be reduced by increasing the amount of component (D) and/or (E).

### [Other components]

In the UV-curable organopolysiloxane composition, additives may be blended as long as the benefits of the invention are not impaired, for example, reinforcing fillers such as fumed silica, wet silica, precipitated silica, and calcium carbonate, coloring agents (pigments or dyes), adhesive aids, polymerization inhibitors, antioxidants, UV absorbers or light resistant stabilizers, UV emitting agents, and photo-stabilizers.

The composition of the invention may also be used in admixture with another resin composition.

### [Method of preparing UV-curable organopolysiloxane composition]

The UV-curable organopolysiloxane composition may be prepared by mixing components (A) to (C) and optionally, components (D) and (E) and other components in any desired order, and stirring them. The equipment used in stirring or mixing operation may be an automated mortar, three-roll mill, ball mill or planetary mixer, but is not limited thereto. These equipment may be used in combination.

From the aspects of shape retention and workability in coating step, the UV-curable organopolysiloxane composition should preferably have a viscosity of 0.05 Pa·s to 50 Pa·s, more preferably 0.1 Pa·s to 10 Pa·s, even more preferably 0.1 Pa·s to 5 Pa·s as measured at 25°C by a rotational viscometer.

The UV-curable organopolysiloxane composition can be rapidly cured into a cured product by irradiating UV radiation thereto.

The light source for irradiating UV to the composition is, for example, a UV-LED lamp, high-pressure mercury lamp, ultra high-pressure mercury lamp, metal halide lamp, carbon arc lamp or xenon lamp.

The dose (integrated light quantity) of UV is, for example, preferably 1 to 10,000 mJ/cm², more preferably 10 to 8,000 mJ/cm² relative to a sheet of about 2.0 mm thick shaped from the composition. Specifically, when UV radiation of illuminance 100 mW/cm² is used, it suffices that UV is irradiated for about 0.01 to 100 seconds.

The UV-curable organopolysiloxane composition contains an organopolysiloxane having the formula (1) as component (A). Since the organopolysiloxane having the formula (1) has a (meth)acryloyl functional group in the vicinity of a urea group, the reactivity between (meth)acryloyl functional groups is high. In addition, since the thiol compound as component (C) functions as a chain transfer agent for radicals generated upon UV irradiation, the organopolysiloxane does not undergo surface cure inhibition even in oxygen-containing air (excellent resistance against oxygen inhibition), exhibits satisfactory surface cure and satisfactory cure even in dark areas which are unaccesible to UV.

The cured product of the UV-curable organopolysiloxane composition exhibits improved rubber physical properties, and has a cured hardness of preferably 10 to 90 (Type A), more preferably 12 to 80 (Type A), even more preferably 20 to 80 (Type A). Notably, these values are as measured according to JIS K 6249:2003. The cured hardness can be adjusted by varying the amounts of components (C) to (E) added.

The UV-curable organopolysiloxane composition is advantageously used in electronic devices in air conditioners, personal computers, electric tools and the like and specifically, as coating agents for electronic boards of complex structure and adhesives for electronic parts.

### EXAMPLES

Synthesis Examples, Examples, and Comparative Examples are given below for illustrating the invention, but the invention is not limited thereto. It is noted that the viscosity is measured at 25°C by a rotational viscometer TVB-10 (Toki Sangyo Co., Ltd.). In the following formulae, Me stands for methyl.

### [Synthesis Example 1]

A flask was charged with 1,000 g (amino group amount: 0.188 mol) of both end amino-modified dimethylsilicone oil (both end (3-aminopropyldimethylsiloxy)-capped dimethylpolysiloxane, KF-8008 by Shin-Etsu Chemical Co., Ltd.) and 27.8 g (0.197 mol) of 2-(acryloyloxy)ethyl isocyanate (Karenz AOI by Resonac Corp.). Stirring at 25°C for 24 hours yielded organopolysiloxane (A1) represented by the following average structural formula and having a viscosity of 9.5 Pa·s.

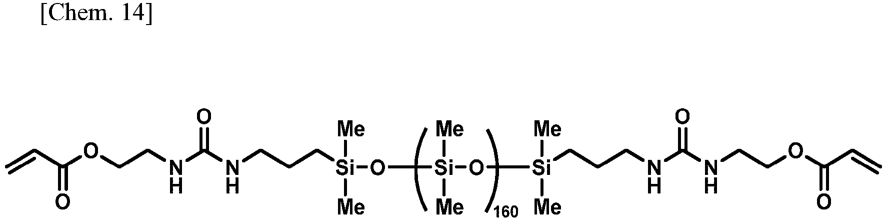

### [Synthesis Example 2]

A flask was charged with 1,000 g (amino group amount: 0.188 mol) of both end amino-modified dimethylsilicone oil (both end (3-aminopropldimethylsiloxy)-capped dimethylpolysiloxane, KF-8008 by Shin-Etsu Chemical Co., Ltd.) and 47.22 g (0.197 mol) of 1,1-(bisacryloyloxymethyl)ethyl isocyanate (Karenz BEI by Resonac Corp.). Stirring at 25°C for 24 hours yielded organopolysiloxane (A2) represented by the following average structural formula and having a viscosity of 13.0 Pa·s.

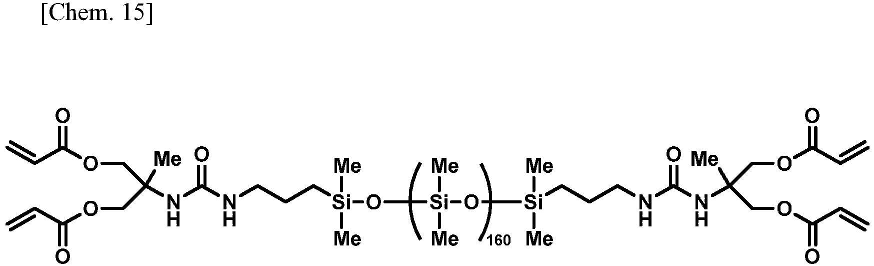

### [Examples 1 to 8 and Comparative Examples 1 to 5]

UV-curable organopolysiloxane compositions S-1 to S-13 were prepared by mixing components (A) to (E) shown below in accordance with the formulation shown in Tables 1 and 2.

The compounds used as components (A) to (E) in Examples 1 to 8 and Comparative Examples 1 to 5 are identified below.

### Component (A)

(A-1) organopolysiloxane (A1) obtained in Synthesis Example 1
(A-1) organopolysiloxane (A2) obtained in Synthesis Example 2
(A-3) organopolysiloxane having the following average structural formula (viscosity ~1.0 Pa·s) for use in Comparative Examples 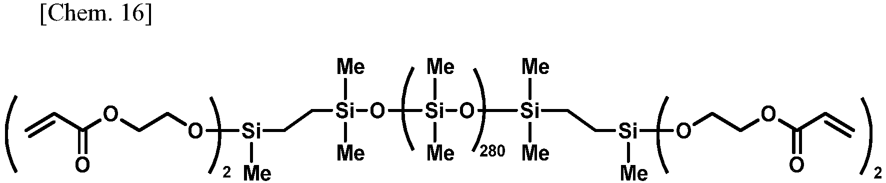
(A-4) organopolysiloxane having the following average structural formula (viscosity ~5.0 Pa·s) for use in Comparative Examples

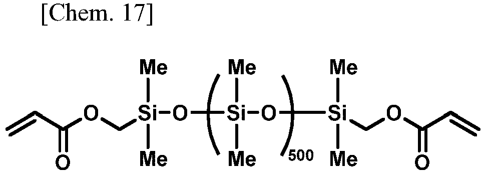

### Component (B)

(B-1) 2-hydroxy-2-methyl-1-phenyl-propan-1-one (OMNIRAD 1173 by iGM Resin)
(B-2) 2,4,6-trimethylbenzoyl diphenyl phosphine oxide (OMNIRAD TPO-L by iGM Resin)

### Component (C)

(C-1) 2-ethylhexyl-3-mercaptopropionate (EHMP by Sakai Chemical Industry Co., Ltd.)
(C-2) 1,4-butanediol bis(3-mercaptopropionate) (BDMP by Sakai Chemical Industry Co., Ltd.)
(C-3) 1,4-bis(3-mercaptobutyryloxy)butane (Karenz MT BD1 by Resonac Corp.)

### Component (D)

(D-1) cyclohexyl acrylate (Tokyo Chemical Industry Co., Ltd.)

### Component (E)

(E-1) neopentyl glycol diacrylate (Tokyo Chemical Industry Co., Ltd.)

### Oxygen inhibition resistance (surface cure)

The UV-curable organopolysiloxane compositions S-1 to S-13 prepared above were irradiated with UV radiation of 365 nm, obtaining cured products of sheet shape of length 100 mm by width 100 mm by thickness ~3 mm. The surface of the cured product immediately after UV irradiation was inspected for oxygen inhibition resistance (surface cure) by finger touch and rated "complete cure (O)" when any uncured layer was not detected and "incomplete cure (×)" when an uncured layer was detected. The results are shown in Tables 1 and 2.

For UV irradiation, an UV-LED irradiation device (CCS Inc.) was operated so as to emit UV of 365 nm at an irradiance of 100 mW/cm² and an integrated dose of 3,000 mJ/cm².

### Hardness

The UV-curable organopolysiloxane compositions S-1 to S-13 prepared above were irradiated with UV radiation of 365 nm, obtaining cured products of sheet shape of length 60 mm by width 60 mm by thickness 6 mm. The cured products were measured for hardness by Type A Durometer of JIS K 6249: 2003 according to JIS K 6249: 2003. The results are shown in Tables 1 and 2.

### Dark area cure

Each of UV-curable organopolysiloxane compositions S-1 to S-13 prepared above was cast into a Teflon^{®} mold of width 10 mm by length 50 mm by depth 1 mm and covered on top with a thin quartz glass plate of 0.5 mm thick so as to avoid entry of air bubbles. A light-shielding acrylic plate was rested on the mold so that only an area of width 10 mm by length 10 mm from one side of the mold was accessible to UV, completing an assembly for dark area cure test. The test assembly was irradiated with UV under the above-mentioned conditions to form a cured product.

After an uncured portion was removed from the cured product, the length of the cured portion extending from the UV-irradiated portion toward the non-irradiated portion was measured as an index of dark area cure. The results are shown in Tables 1 and 2.

**[Table 1]**

| | | Example | | | | | | |
|---|---|---|---|---|---|---|---|---|
| | | 1 | 2 | 3 | 4 | 5 | 6 | 7 |
| UV-curable organopolysiloxane composition | | S-1 | S-2 | S-3 | S-4 | S-5 | S-6 | S-7 |
| Formulation (pbw) | A-1 | 100 | 100 | 100 | 100 | 100 | 100 | 100 |
| | A-2 | | | | | | | |
| | A-3 | | | | | | | |
| | A-4 | | | | | | | |
| | B-1 | 1.0 | 1.0 | 1.0 | 1.0 | 1.0 | 1.0 | 1.0 |
| | B-2 | | | | | | | |
| | C-1 | 4.1 | 6.2 | | | | | |
| | C-2 | | | 5.1 | | | | |
| | C-3 | | | | 5.6 | 8.4 | 10.4 | 11.7 |
| | D-1 | | | | | | 5.0 | |
| | E-1 | | | | | | | 5.0 |
| Cured properties | Surface cure | ○ | ○ | ○ | ○ | ○ | ○ | ○ |
| | Type A Hardness | 19 | 13 | 16 | 18 | 17 | 22 | 31 |
| | Dark area cure (mm) | 20 | 24 | 23 | 22 | 26 | 18 | 20 |

**[Table 2]**

| | | Example | Comparative Example | | | | |
|---|---|---|---|---|---|---|---|
| | | 8 | 1 | 2 | 3 | 4 | 5 |
| UV-curable organopolysiloxane composition | | S-8 | S-9 | S-10 | S-11 | S-12 | S-13 |
| Formulation (pbw) | A-1 | | 100 | 100 | | | |
| | A-2 | 100 | | | 100 | | |
| | A-3 | | | | | 100 | |
| | A-4 | | | | | | 100 |
| | B-1 | 1.0 | 1.0 | | 1.0 | 1.0 | 1.0 |
| | B-2 | | | 1.0 | | | |
| | C-1 | | | | | 5.1 | 1.2 |
| | C-2 | | | | | | |
| | C-3 | 11.2 | | | | | |
| | D-1 | | | | | | |
| | E-1 | | | | | | |
| Cured properties | Surface cure | ○ | × | × | × | × | × |
| | Type A Hardness | 20 | 37 | 37 | 46 | 6 | uncured |
| | Dark area cure (mm) | 25 | 4 | 4 | 5 | 2 | uncured |

On UV irradiation, the UV-curable organopolysiloxane compositions of Examples 1 to 8 within the scope of the invention rapidly cure even in air without undergoing oxygen cure inhibition. They exhibit excellent dark area cure in that cure proceeds even in the dark area which is not accessible to UV. In contrast, the UV-curable organopolysiloxane compositions of Comparative Examples 1 to 5 show insufficient surface cure on UV irradiation (oxygen cure inhibition resistance), and cure does not proceed in the dark area which is not accessible to UV.

## Claims

1. A UV-curable organopolysiloxane composition comprising
(A) 100 parts by weight of an organopolysiloxane having the formula (1): 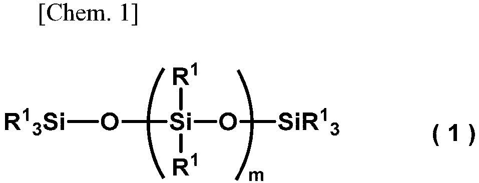
wherein R¹ is independently a C₁-C₁₀ monovalent hydrocarbon group or a monovalent group having the formula (2), at least one monovalent group having the formula (2) being contained in the molecule, and m is an integer of 1 to 10,000, 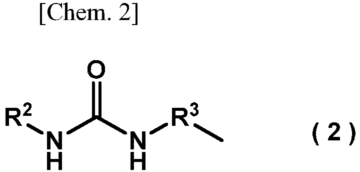
wherein R² is a monovalent group containing at least one group selected from among acryloyl, methacryloyl, acryloyloxy, and methacryloyloxy groups and R³ is a C₁-C₂₀ divalent hydrocarbon group,
(B) 0.1 to 20 parts by weight of a photopolymerization initiator, and
(C) 0.1 to 50 parts by weight of a thiol compound.

2. The UV-curable organopolysiloxane composition of claim 1 wherein component (C) is a thiol compound having the formula (3):
[R⁴-CH(SH)-R⁵-C(=O)O-]ₙR⁶ (3)
wherein R⁴ is hydrogen or a C₁-C₂₀ monovalent hydrocarbon group, R⁵ is a C₁-C₂₀ divalent hydrocarbon group, R⁶ is a C₁-C₂₀ mono- to trivalent hydrocarbon group which may contain oxygen, and n is 1, 2 or 3.

3. The UV-curable organopolysiloxane composition of claim 1, further comprising either one or both of (D) a monofunctional (meth)acrylate compound free of a siloxane structure in the molecule and (E) a polyfunctional (meth)acrylate compound free of a siloxane structure in the molecule, the total amount of components (D) and (E) being 1 to 500 parts by weight per 100 parts by weight of component (A).

4. A cured product of the UV-curable organopolysiloxane composition of any one of claims 1 to 3.

5. An electronic device coated or bonded with the cured product of claim 4.
